# EUROPÄISCHE PATENTSCHRIFT

(11) **EP 0 414 173 B1**
(45) Veröffentlichungstag und Bekanntmachung des Hinweises auf die Patenterteilung: **24.02.1993**
(21) Anmeldenummer: 90115865.9
(22) Anmeldetag: 18.08.1990
(51) Int. Cl.: F16L 37/08, F16B 21/18

(54) **Vorrichtung zum lösbaren Befestigen und Sichern eines Steckteils in einer Hülse**
Device for removably affixing and securing a plug-in element to a receptacle
Dispositif pour la fixation de façon détachable et la rétention d'un élément enfichable dans un boîtier

(30) Priorität: 24.08.1989 CH 3072/89
(43) Veröffentlichungstag der Anmeldung: 27.02.1991
(73) Patentinhaber: BUCHER-GUYER AG Maschinenfabrik, CH-8166 Niederweningen (CH)
(72) Erfinder: Chara, Alexandr, CH-8212 Neuhausen (CH)

(56) Entgegenhaltungen:
- EP-A- 356 914
- GB-A- 629 729
- GB-A- 901 280
- US-A- 2 491 310
- US-A- 4 561 682
- US-A- 4 813 716

## Beschreibung

Die Erfindung betrifft eine Kombination eines Steckteils mit einer Aufnahme, einer Hülse und mindestens einem Sicherungsring, insbesondere eines Drainageelements mit der Druckplatte einer Früchtepresse, wobei das Steckteil in der Aufnahme lösbar befestigt und gesichert ist und der mindestens eine Sicherungsring auf der Hülse angeordnet ist und in eine Ausnehmung des Steckteils eingreift.

Die Drainageelemente einer bekannten Früchtepresse bestehen aus flexiblen Rundprofilstäben, die zwischen zwei den Pressraum der Früchtepresse begrenzenden Druckplatten angeordnet sind. Die freien Enden der Drainageelemente sind mit je einem Bajonettverschlusss an den Druckplatten lösbar befestigt. Hierzu ist auf das jeweilige freie Ende des Drainagelements ein Steckteil mit einem Bajonettprofil aufgesetzt, das in eine Hülse der Druckplatte eingeführt wird und durch Drehen um ca. 90° in der Hülse axial gesichert ist. Zur Sicherung gegen Verdrehen des Steckteils in der Verschlussstellung ist in eine am Aussenumfang der Hülse angebrachte Ringnut ein Sicherungsring aus Rundfederstahl eingelegt. Das rechtwinklig abgebogene freie Ende des Sicherungsringes durchsetzt eine Bohrung der Hülsenwandung und greift in eine Ausnehmung am Aussenumfang des Steckteils ein. Zum Lösen des Drainagelements wird das Ende des Sicherungsringes angehoben, das Steckteil um ca. 90° zurückgedreht und in axialer Richtung aus der Hülse herausgezogen. Ein derartiges Drainageelement ist in der älteren Anmeldung EP-A-0 356 914 (Bucher-Guyer AG) beschrieben (veröffentlicht 07.03.90, Stand der Technik gemäß Art. 54(3) EPÜ).

Nachteilig bei dieser Art der Befestigung ist, dass zur Aufnahme des Sicherungsringes in die Aussenwandung der Hülse eine Nut mit einer gewissen Einstichtiefe eingedreht werden muss. Dies erfordert eine relativ dicke Hülsenwandung, die ein höheres Gewicht und höhere Materialkosten verursacht. Ausserdem kann sich der Sicherungsring bei grösseren Belastungen selbsttätig aus der Nut lösen. Da der Drahtdurchmesser des Sicherungsringes wegen der erforderlichen Federwirkung relativ klein ist, wird das in die Ausnehmung des Steckteils eingreifende Ende des Sicherungsringes bei grösseren Axialkräften unzulässig hoch beansprucht. Die axiale Entlastung des Sicherungsringes durch den bei der bekannten Ausführung verwendeten Bajonettverschluss muss mit relativ hohen Herstellungskosten erkauft werden. Ein weiterer Nachteil der bekannten Ausführung besteht darin, dass die Hülse zur Aufnahme der Axialkräfte in die Druckplatten des Pressraumes eingeschraubt werden muss. Das führt zu einer zeitaufwendigen und erschwerten Montage.

Aus US 2 491 310 (Waldes Koh-I-Noor) ist schon ein offener Aussen- Haltering bekannt, welcher in eine Nut auf einer Welle, einem Stift oder dergleichen aufgesprengt werden kann. Dieser Haltering besteht aus einem ringförmigen Körper mit kreisförmiger äusserer und innerer Begrenzung, wobei die Begrenzungen exzentrisch zueinander liegen, sodass die Ringstärke von einer Mittelzone zu den freien Enden hin laufend abnimmt. Die innere Begrenzung weist an der Mittelzone und an den freien Enden Vorsprünge auf, deren innere Begrenzungen als mit der äusseren Ringbegrenzung konzentrische Kreisbögen ausgeführt sind. Die Länge der Vorsprünge ist so bemessen, dass dieselben einen hinreichenden Pressdruck am Umfang der Nut ausüben, jedoch Deformationen des Ringes nicht behindern.

Der Erfindung liegt die Aufgabe zugrunde, die genannten Nachteile zu vermeiden und eine Vorrichtung der eingangs erwähnten Art zu schaffen, die eine leicht lösbare, kostensparende und funktionssichere Verbindung sowohl zwischen Hülse und Drainageelement als auch zwischen Hülse und Druckplatte ermöglicht.

Gemäss der Erfindung wird diese Aufgabe dadurch gelöst, dass der Sicherungsring aus einem federnden Werkstoff besteht und an seinem Innenumfang eine oder mehrere Nocken aufweist, die entsprechende Schlitze in der Hülsenwandung durchsetzen. Als Werkstoff für den Sicherungsring eignet sich Flachfederstahl.

Zur gleichzeitigen Axial- und Verdrehsicherung zwischen Hülse und Steckteil ist mindestens eine Nocke durch die Hülsenwandung nach innen hindurchgeführt und greift in eine entsprechende Ausnehmung am Aussenumfang des Steckteils ein.

Für die Axialsicherung der Hülse sind die Schlitze zur Aufnahme des Sicherungsringes im Bereich der vorderen Stirnseite der Hülse angeordnet und weisen einen axialen Abstand von einem Bund der Hülse auf, der etwas grösser ist als die Dicke der Druckplatte, in welche die Hülse eingesetzt ist.

Eine Sicherung gegen Verdrehen des Sicherungsringes und des Steckteils wird dadurch erreicht, dass die Länge der Schlitze und die Länge der Ausnehmung der Breite der Nocken entspricht.

Nach einem weiteren Merkmal der Erfindung ist an einem Ende des Sicherungsringes die für den Eingriff in das Steckteil vorgesehene Nocke sowie ein Schaltschlitz zum Lösen der Nocke angeordnet.

Zur selbsttätigen Verriegelung des Steckteils mit der Hülse weist das Steckteil an seiner vorderen Stirnseite eine Anschrägung auf, die beim Einführen in die Hülse mit der Nocke des Sicherungsringes zusammenwirkt und diese in die Lösestellung anhebt.

Zur Erhöhung der Haltekraft des Sicherungsringes wird das Ende des Sicherungsringes, das die für den Eingriff in das Steckteil vorgesehene Nocke trägt, vom anderen Ende des Sicherungsringes überdeckt. Dabei liegen die mit je einer Schräge versehenen Enden des Sicherungsringes übereinander.

Es erweist sich als besonders vorteilhaft, wenn die Hülse an der Rückseite der Druckplatte anliegend ausgebildet ist und sich der Sicherungsring auf dem dem Pressraum zugewendeten Ende der Hülse befindet.

Die mit der Erfindung erzielten Vorteile bestehen insbesondere darin, dass die Hülsenwandung infolge der Ausbildung des Sicherungsringes als Flachfederring sehr dünn gewählt werden kann. Die Folge davon sind nicht unerhebliche Gewichts- und Kosteneinsparungen. Ausserdem ergeben sich durch die erzielte Platzeinsparung günstigere Einbauverhältnisse. Die relativ grosse Auflagebreite der Nocken zur Aufnahme der Axialkräfte sorgt für eine sichere Kraftübertragung. Ein weiterer Vorteil ist, dass beim Lösen der Nocke, die mit dem Steckteil im Eingriff steht, der Sicherungsring gegen Verdrehen und Herausfallen gesichert ist, da die anderen Nocken des Sicherungsringes im Eingriff mit der Hülse stehen. Die Herstellung des Sicherungsringes aus Flachfederstahl gestattet auch eine exakte Fertigung durch Stanzen.

Die Erfindung ist in der folgenden Beschreibung und der Zeichnung, die ein Ausführungsbeispiel darstellt, näher erläutert. Es zeigen
Fig. 1 einen Längsschnitt durch die Befestigung des Drainageelementes,
Fig. 2 einen Schnitt gemäss der Linie II - II in Fig. 1,
Fig. 3 eine andere Ausführungsform des Sicherungsringes,
Fig. 4 eine weitere Ausführungsform der Befestigung im Längsschnitt,
Fig. 5 einen Schnitt gemäss der Linie V - V in Fig. 4 und
Fig. 6 einen Schnitt gemäss der Linie VI - VI in Fig. 4.

In einem durch je eine Druckplatte 1 begrenzten Pressraum 2 einer nicht näher dargestellten Früchtepresse sind mehrere Drainageelemente 3 angeordnet. Auf das Ende des Drainageelements 3 ist ein Steckteil 4 aufgesetzt, das in eine Hülse 5 der Druckplatte 1 eingeführt wird. Die Hülse 5 durchsetzt eine Bohrung der Druckplatte 1 und liegt mit einem Bund 6 an der Aussenseite der Druckplatte 1 an. Das vordere Ende der Hülse 5 ist durch die Druckplatte 1 hindurchgeführt und trägt einen Sicherungsring 7, der die Hülse 5 in axialer Richtung sichert. Das rückwärtige Ende der Hülse 5 liegt an einer Stirnwand 8 der Früchtepresse an, die nach dem Einbau der Hülse 5 montiert wurde.

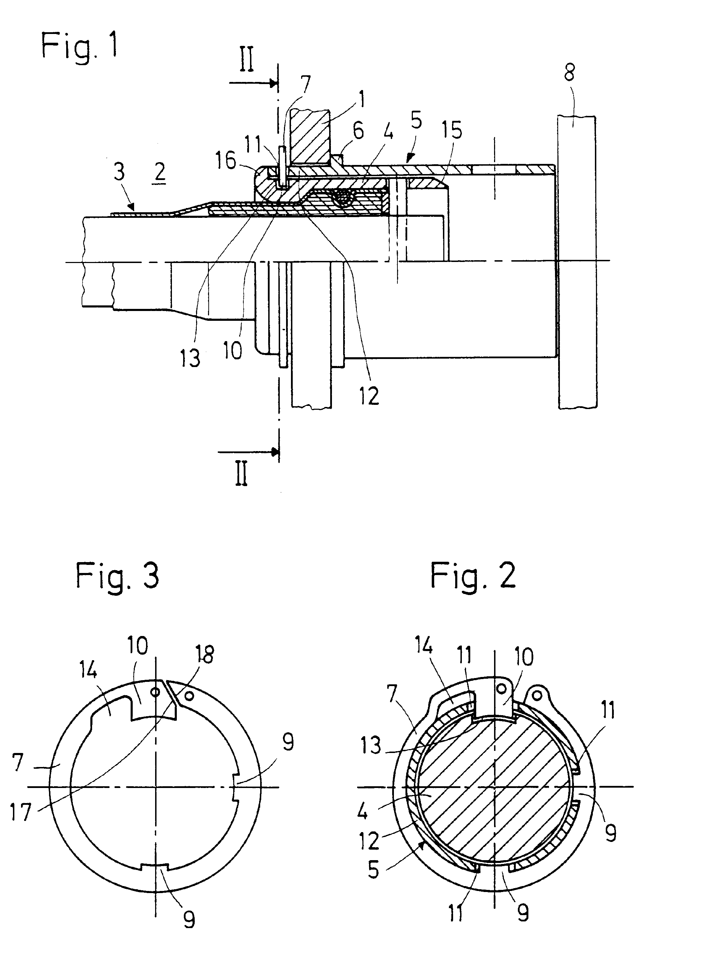

Der Sicherungsring 7 ist als Flachfederring ausgeführt und weist an seinem Innenumfang mehrere Nocken 9 und 10 auf (Fig. 2), im Auführungsbeispiel sind es zwei Nocken 9 und eine Nocke 10. Die nach innen gerichteten Nocken 9 und 10 durchsetzen je einen Schlitz 11 der Hülsenwandung 12, dessen Länge etwas grösser ist als die Breite der Nocken 9 und 10. Dadurch ist der Sicherungsring 7 auf der Hülse 5 gegen Verdrehen und die Hülse 5 gegen axiales Verschieben gesichert. Während die Nocken 9 nicht über die Innenwandung der Hülse 5 überstehen, greift die Nocke 10 durch die Hülsenwandung 12 hindurch in eine Ausnehmung 13 ein, die sich am Aussenumfang des Steckteils 4 befindet und deren Länge etwas grösser ist als die Breite der Nocke 10. Dadurch ist das Steckteil 4 bzw. das Drainageelement 3 sowohl gegen Axialbewegungen als auch gegen Verdrehen gesichert. Die Nocke 10 bildet das Ende des Sicherungsringes 7 und kann über einen ebenfalls am Ende des Sicherungsringes 7 angeordneten Schaltschlitz 14 angehoben werden, so dass das Steckteil 4 freigegeben wird und das Drainagelement 3 entfernt werden kann.

Die vordere Stirnseite des Steckteils 4 weist eine Anschrägung 15 auf, die beim Einführen des Steckteils 4 in die Hülse 5 auf die Nocke 10 auftrifft und diese gegen die Federkraft des Sicherungsringes 7 anhebt. Das Steckteil 4 wird so weit in die Hülse 5 eingeschoben, bis es mit einem Bund 16 an der Stirnseite der Hülse 5 zur Anlage kommt. Danach wird das Steckteil 4 bzw. das Drainageelement 3 verdreht, bis die Nocke 10 in die Ausnehmung 13 einrastet und das Steckteil 4 mit der Hülse 5 verriegelt ist.

In Fig. 3 ist eine andere Ausführungsform des Sicherungsringes 7 dargestellt. Das die Nocke 10 tragende Ende des Sicherungsringes 7 weist eine Schräge 17 auf, die von einer Schräge 18 des anderen Endes des Sicherungsringes 7 überdeckt wird. Beim Anheben der Nocke 10 drückt die Schräge 17 auf die Schräge 18, die dem weiteren Anheben der Nocke 10 einen grösseren Widerstand entgegensetzt und damit eine erhöhte Haltekraft des Sicherungsringes 7 bewirkt.

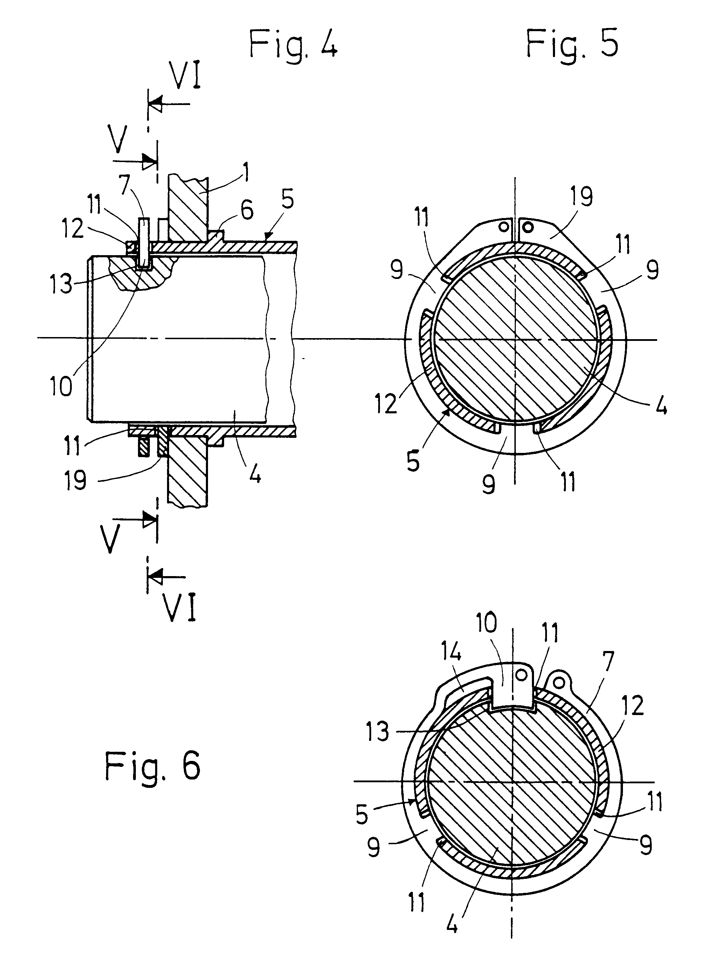

Die Fig. 4 bis 6 zeigen ein Ausführungsbeispiel, bei dem ein zusätzlicher Sicherungsring 19 vorgesehen ist. Der auf der Hülse 5 angeordnete Sicherungsring 19 liegt an der Innenseite der Druckplatte 1 an und dient somit zur Axialsicherung der Hülse 5. Drei am Innenumfang des Sicherungsringes 19 angeordnete Nocken 9 greifen in die Schlitze 11 der Hülse 5 ein und sichern die Position des Sicherungsringes 19 auf der Hülse 5. Mit axialem Abstand vom Sicherungsring 19 ist der Sicherungsring 7 angeordnet, der wie im Auführungsbeispiel nach Fig. 1 die Funktion der Axial- und Radialsicherung des Steckteils 4, jedoch ohne Axialsicherung der Hülse 5, übernimmt.

In weiteren, nicht dargestellten Ausführungsformen der Erfindung kann beispielsweise der Sicherungsring 7 bzw. 19 auch mit einem Bajonettverschluss kombiniert werden, wie er in bekannter Weise zur Befestigung und Sicherung von Drainagelementen in der Druckplatte einer Früchtepresse verwendet wird. Dabei besteht auch die Möglichkeit, anstelle der Steckverbindung zwischen Druckplatte 1 und Hülse 5 eine Schraubverbindung vorzusehen.

Die Anwendung der erfindungsgemässen Befestigung und Sicherung ist nicht beschränkt auf Drainageelemente für Früchtepressen. Sie kann überall dort mit Vorteil eingesetzt werden, wo ein Steckteil in einer Hülse und/oder die Hülse in einer Platte gegen axiale und radiale Bewegungen gesichert werden soll.

## Patentansprüche

1. Kombination eines Steckteils mit einer Aufnahme, einer Hülse und mindestens einem Sicherungsring, insbesondere eines Drainageelements mit der Druckplatte einer Früchtepresse, wobei das Steckteil in der Aufnahme lösbar befestigt und gesichert ist und der mindestens eine Sicherungsring auf der Hülse angeordnet ist und in eine Ausnehmung des Steckteils eingreift und wobei der Sicherungsring (7,) aus einem federnden Werkstoff besteht und an seinem Innenumfang eine oder mehrere Nocken (9, 10) aufweist, die entsprechende Schlitze (11) in der Hülsenwandung (12) durchsetzen.

2. Kombination nach Anspruch 1, **dadurch gekennzeichnet**, dass mindestens eine Nocke (10) durch den Schlitz (11) in der Hülsenwandung (12) hindurchgeführt ist und in eine entsprechende Ausnehmung (13) am Aussenumfang des Steckteils (4) eingreift.

3. Kombination nach Anspruch 1 oder 2, **dadurch gekennzeichnet,** dass die Hülse (5) einen Ringbund (6) aufweist, dass die Schlitze (11) zur Aufnahme der Sicherungsringe (7, 19) im Bereich der vorderen Stirnseite der Hülse (5) angeordnet sind, und dass ein axialer Abstand zwischen den Schlitzen (11) und dem Bund (6) der Hülse (5) etwas grösser ist als die Dicke der Aufnahme (1), in welche die Hülse (5) eingesetzt ist.

4. Kombination nach einem der Ansprüche 1 bis 3, **dadurch gekennzeichnet,** dass die Länge der Schlitze (11) der Hülse (5) und die Länge der Ausnehmung (13) des Steckteiles (4) der Breite der Nocken (9, 10) entspricht.

5. Kombination nach einem der Ansprüche 1 bis 4, **dadurch gekennzeichnet,** dass die Nocke (10) des Sicherungsringes (7), welche in die Ausnehmung (13) des Steckteiles (4) eingreift, sowie ein Schaltschlitz (14) zum Lösen der Nocke (10) an einem Ende des Sicherungsringes (7) angeordnet sind.

6. Kombination nach einem der Ansprüche 1 bis 5, **dadurch gekennzeichnet,** dass das Steckteil (4) an seiner vorderen Stirnseite eine Anschrägung (15) aufweist, die beim Einführen des Steckteiles (4) in die Hülse (5) mit der Nocke (10) des Sicherungsringes (7) zusammenwirkt und diese in die Lösestellung anhebt.

7. Kombination nach einem der Ansprüche 1 bis 6, **dadurch gekennzeichnet,** dass das Ende des Sicherungsringes (7), das die für den Eingriff in das Steckteil (4) vorgesehene Nocke (10) trägt, vom anderen Ende des Sicherungsringes (7) überdeckt ist.

8. Kombination nach Anspruch 7, **dadurch gekennzeichnet**, dass die mit je einer Schräge (17, 18) versehenen Enden des Sicherungsringes (7) übereinanderliegen.

9. Kombination nach einem der Ansprüche 1 bis 8, mit einem zusätzlichen, auf dem dem Pressraum zugewendeten Ende der Hülse angeordneten zweiten Sicherungsring (19), **dadurch gekennzeichnet,** dass die Hülse (5) einen Ringbund (6) aufweist, mit welchem sie auf der dem Pressraum (2) abgewendeten Seite der Aufnahme (1) anliegt, und dass der zweite Sicherungsring (19) auf der dem Pressraum (2) zugewendeten Seite der Druckplatte (1) anliegt und die Hülse (5) gegen axiale Verschiebungen gegenüber der Druckplatte (1) sichert.

## Claims

1. Connection of a plug-in element to a receptacle, a sleeve and at least one retaining ring, especially a drainage element to the pressing plate of a fruit press, the plug-in element being removably affixed and secured to the receptacle and the at least one retaining ring being arranged on the sleeve and engaging a recess in the plug-in element and the retaining ring (7) consisting of a resilient material and having one or more cams (9, 10) on its inner circumference which pass through corresponding slots (11) in the sleeve wall (12).

2. Connection according to claim 1, characterised in that at least one cam (10) is passed through the slot (11) in the sleeve wall (12) and engages a corresponding recess (13) on the outer circumference of the plug-in element (4).

3. Connection according to claim 1 or claim 2, characterised in that the sleeve (5) has a collar (6), that the slots (11) for receiving the retaining rings (7, 19) are arranged in the region of the front end of the sleeve (5), and that the axial spacing between the slots (11) and the collar (6) of the sleeve (5) is slightly greater than the thickness of the receptacle (1) into which the sleeve (5) is inserted.

4. Connection according to one of claims 1 to 3, characterised in that the length of the slots (11) of the sleeve (5) and the length of the recess (13) of the plug-in element (4) correspond to the width of the cams (9, 10).

5. Connection according to one of claims 1 to 4, characterised in that the cam (10) of the retaining ring (7) which engages the recess (13) of the plug-in element (4) and a trip slot (14) for releasing the cam (10) are arranged at one end of the retaining ring (7).

6. Connection according to one of claims 1 to 5, characterised in that the plug-in element (4) has a chamfer (15) at its front end which cooperates with the cam (10) of the retaining ring (7) when the plug-in element (4) is inserted into the sleeve (5) and lifts it into the release position.

7. Connection according to one of claims 1 to 6, characterised in that the end of the retaining ring (7) carrying the cam (10) provided for engagement with the plug-in element (4) is covered by the other end of the retaining ring (7).

8. Connection according to claim 7, characterised in that the ends of the retaining ring (7) each provided with a chamfer (17, 18) lie on top of one another.

9. Connection according to one of claims 1 to 8, with a second additional retaining ring (19) arranged on the end of the sleeve directed towards the pressing space, characterised in that the sleeve (5) has a collar (6) by means of which it bears against the side of the receptacle (1) remote from the pressing space (2), and that the second retaining ring (19) bears against the side of the pressing plate (1) directed towards the pressing space and secures the sleeve (5) against axial displacement with respect to the pressing plate (1).

## Revendications

1. Combinaison d'une pièce à enfoncer et d'un réceptacle, d'un manchon et d'au moins une bague de blocage, et en particulier d'un élément de drainage et du plateau de pression d'un pressoir à fruits, dans laquelle la pièce à enfoncer est fixée et bloquée dans le réceptacle d'une manière amovible et la bague de blocage au moins est disposée sur le manchon et pénètre dans un évidement de la pièce à enfoncer, et dans laquelle la bague de blocage (7) est constituée par un matériau élastique et présente sur son pourtour intérieur un ou plusieurs ergots (9, 10) qui traversent des fentes correspondantes (11) ménagées dans la paroi (12) du manchon.

2. Combinaison selon la revendication 1, caractérisée par le fait qu'au moins un ergot (10) passe à travers la fente (11) ménagée dans la paroi (12) du manchon, et qu'il pénètre dans un évidement correspondant (13) ménagé sur le pourtour extérieur de la pièce à enfoncer (4).

3. Combinaison selon la revendication 1 ou 2, caractérisée par le fait que le manchon (5) présente un collet annulaire (6), par le fait que les fentes (11) destinées à recevoir les bagues de blocage (7, 19) sont disposées dans la région du côté frontal avant du manchon (5), et par le fait qu'une distance dans le sens axial entre les fentes (11) et le collet (6) du manchon (5) est légèrement supérieure à l'épaisseur du réceptacle (1) dans lequel est introduit le manchon (5).

4. Combinaison selon l'une des revendications 1 à 3, caractérisée par le fait que la longueur des fentes (11) du manchon (5) et la longueur de l'évidement (13) de la pièce à enfoncer (4) correspondent à la largeur des ergots (9, 10).

5. Combinaison selon l'une des revendications 1 à 4, caractérisée par le fait que l'ergot (10) de la bague de blocage (7) qui pénètre dans l'évidement (13) de la pièce à enfoncer (4), ainsi qu'une fente de commande (14) destinée à détacher l'ergot (10), sont disposés à une extrémité de la bague de blocage (7).

6. Combinaison selon l'une des revendications 1 à 5, caractérisée par le fait que la pièce à enfoncer (4) présente sur son côté frontal avant un chanfrein (15) qui, lors de l'introduction de la pièce à enfoncer (4) dans le manchon (5), coopère avec l'ergot (10) de la bague de blocage (7) et soulève celui-ci dans la position de détachement.

7. Combinaison selon l'une des revendications 1 à 6, caractérisée par le fait que l'extrémité de la bague de blocage (7) qui porte l'ergot (10) prévu pour pénétrer dans la pièce à enfoncer (4) est recouverte par l'autre extrémité de la bague de blocage (7).

8. Combinaison selon la revendication 7, caractérisée par le fait que les extrémités de la bague de blocage (7) sont superposées, et qu'elles sont munies chacune d'une rampe (17, 18).

9. Combinaison selon l'une des revendications 1 à 8, comprenant une deuxième bague de blocage supplémentaire (19) disposée sur l'extrémité du manchon qui est tournée vers la chambre de pressage, et caractérisée par le fait que le manchon (5) comporte un collet annulaire (6) par lequel il porte sur le côté du réceptacle (1) qui est opposé à la chambre de pressage (2), et par le fait que la deuxième bague de blocage (19) porte sur le côté du plateau de pression (1) qui est tourné vers la chambre de pressage (2), et qu'elle bloque le manchon (5) à l'encontre des déplacements dans le sens axial par rapport à la plaque de presse (1).
